# FASCICULE DE BREVET EUROPEEN

(11) **EP 0 889 311 B1**
(45) Date de publication et mention de la délivrance du brevet: **03.12.2003**
(21) Numéro de dépôt: 98401534.7
(22) Date de dépôt: 23.06.1998
(51) Int. Cl.: G01M 3/22

(54) **Contrôle de l'étancheité des tubes radiants dans les fours industriels.**
Dichtigkeitskontrolle der Strahlungsrohre in Industrieöfen
Tightness testing of radiant tubes in industrial furnaces

(30) Priorité: 04.07.1997 FR 9708450
(43) Date de publication de la demande: 07.01.1999
(73) Titulaire: SOLLAC, 92800 Puteaux (FR)
(72) Inventeur: Alvarez, Manuel, 57120 Rombas (FR); Gaggioli, André, 57210 Maizieres lès Metz (FR); Fiorelli, Alain, 57000 Metz (FR); Zander, Dilles, 57440 Algrange (FR)
(74) Mandataire: Ventavoli, Roger

(56) Documents cités:
- EP-A- 0 184 521
- EP-A- 0 389 009

## Description

La présente invention a trait à la maintenance des fours industriels dont le chauffage est assuré par rayonnement à l'aide de tubes radiants parcourus par des fumées de combustion à température élevée. Plus précisément, l'invention concerne le contrôle de l'étanchéité de ces tubes radiants.

Elle s'applique préférentiellement, mais pas limitativement, aux fours sidérurgiques de recuit avant galvanisation. Dans les fours de ce type, il importe d'empêcher que leur enceinte mise sous atmosphère réductrice (HNx généralement) nécessaire au traitement métallurgique des tôles d'acier qui les traversent avant immersion dans un bain de zinc, ne soit dégradéé par des entrées incontrôlées de gaz oxydant. Or, des tubes radiants fissurés peuvent précisément être la cause de telles entrées parasites en raison des fumées de combustion nécessairement oxydantes qu'ils véhiculent jusqu'à leur collecteur de sortie.

Jusqu'à présent, le contrôle de l'état d'étanchéité des tubes radiants consiste à inspecter chaque tube par analyse de la teneur en O₂ à sa sortie après avoir coupé son brûleur en amont. Si la teneur mesurée en O₂ descend trop en dessous des 21% de l'air, c'est qu'il y a eu dilution avec l'atmosphère réductrice entretenue dans le four (les tubes fonctionnent en aspiration) et on est donc en présence d'un défaut d'étanchéité.

Cette pratique est longue, lourde et oblige à inspecter les tubes les uns après les autres pour ne pas trop pénaliser la marche du four par arrêt des brûleurs.

L'invention a pour but de proposer une solution plus élégante.

A cet effet, l'invention a pour objet une méthode de contrôle de l'étanchéité des tubes radiants qui consiste à injecter dans l'enceinte du four, celui-ci étant en marche normale, une quantité connue d'un gaz inerte qui diffuse facilement dans l'atmosphère du four, et qui soit aisément détectable même à l'état de trace, (un gaz rare de préférence), puis à mesurer la teneur en ce gaz dans les fumées de combustion au niveau du collecteur de sortie de chaque batterie de tubes radiants et, si le résultat de cette mesure révèle une teneur anormalement élevée par rapport à la teneur naturelle desdites fumées (de l'ordre de 10 ppm), on recherche alors le, ou les tubes défectueux de la batterie considérée à l'aide d'une mesure de la teneur en ce gaz à l'extrémité de sortie de chaque tube de cette batterie.

Comme on le comprend, l'invention consiste donc, dans ses caractéristiques essentielles, à utiliser un traceur gazeux qui diffuse vite dans l'atmosphère de l'enceinte du four, chimiquement inerte à l'égard de la bande qui y défile, neutre à l'égard du caractère réducteur de l'atmosphère du four et non présent naturellement de manière significative dans les fumées de combustion des brûleurs dont chaque tube radiant est équipé.

La préférence pourra être donnée à l'hélium, plutôt qu'à un autre gaz interte comme l'argon, parce qu'on dispose dans le commerce d'analyseurs précis et très sensibles pour cet élément et relativement bon marché.

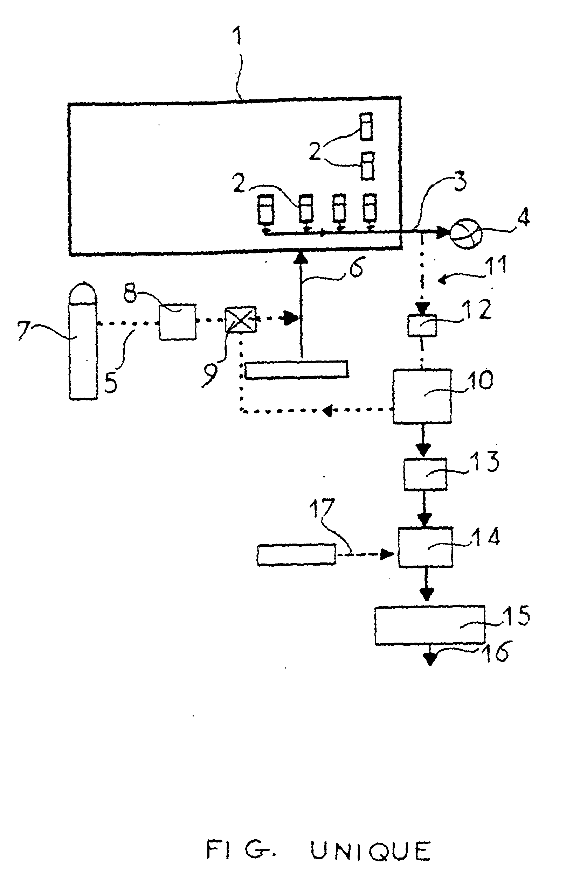

L'invention sera bien comprise et d'autres aspects et avantages apparaîtront plus clairement à la lecture de la Description qui suit, en référence à la figure unique représentant schématiquement un four industriel équipé d'une installation pour la mise en oeuvre de la méthode selon l'invention.

Sur la figure, on a représenté en 1 un four de recuit avant galvanisation d'une bande d'acier (non représentée) qui le traverse. Le parcours de la bande dans le four est jalonné de tubes radiants 2 qui la chauffent par rayonnement direct. Les tubes 2 sont le plus souvent conformés en « W », et présentent donc des épingles à près de 180° d'angle qui les rendent particulièrement sensibles à la fissuration par vieillissement, notamment sous atmosphère hydrogénée (atmosphère de HNx généralement).

Ils comprennent, chacun, à une extrémité un brûleur (par exemple oxy-fuel, ou plus généralement à gaz naturel) et l'autre extrémité débouche dans un collecteur de sortie 3. Classiquement, dans un four de recuit de ce type, les tubes radiants, en nombre de 100 à 150 au total, sont regroupés en batteries d'une dizaine de tubes chaque, pourvues d'un collecteur d'évacuation commun 3, associé à un ventilateur 4 assurant le tirage nécessaire à l'évacuation de l'intégralité des fumées de combustion.

Comme on le voit, conformément à l'invention, une ligne d'injection d'hélium 5 est piquée sur la conduite 6 par laquelle un flux d'HNx est insufflé dans l'enceinte du four 1. Cette ligne comprend une source de gaz liquéfié 7 sous pression, suivie d'un régulateur de débit constant 8 et d'une électro-vanne 9 pilotée en « tout ou rien » par une armoire de commande 10.

Par ailleurs, une ligne de prélèvement gazeux 11 est prévue à la sortie du collecteur 3 pour l'analyse de la teneur en hélium des fumées de combustion issues de la batterie des tubes radiants 2 en cours d'inspection.

Cette ligne de prélèvement 11 comprend successivement, depuis son point de piquage sur le collecteur 3 : un condenseur 12 pour éliminer au maximum l'humidité du flux gazeux prélevé, l'armoire 10 de scrutation séquentielle des différents collecteurs, suivie par un groupe d'épuration 13 des fumées comprenant un filtre et un moyen de séchage des fumées associés à un organe de pompage, une unité 14 de traitement des fumées propres et sèches incluant un régulateur pression-débit et délivrant le flux gazeux à analyser à un détecteur d'hélium 15 doté d'une évacuation à l'atmosphère 16. Ce détecteur peut avantageusement être un spectomètre de masse à déviation magnétique, tel que celui commercialisé par la firme ALCATEL sous la dénomination ASM 121H.

L'opération de contrôle consiste simplement à injecter un courant d'hélium dans l'enceinte du four, en quantité connue, par exemple sous un débit de 0.3 m²/h pendant 1 heure, soit 0,3 m³. L'atmosphère du four, qui initialement ne contient pas d'hélium, s'enrichit en cet élément pour atteindre une certaine concentration, qui dépend du volume de l'enceinte du four, mais qui n'est de toute façon pas critique pour la détection d'hélium dans les tubes radiants dans la mesure où cette concentration sera nécessairement nettement plus élevée que celle, très faible, existant naturellement dans les fumées de combustion. Pour fixer les idées, on retiendra pour bon un niveau de concentration de 300 ppm d'hélium dans le four, pour un four habituel de recuit avant galvanisation. Cette indication chiffrée n'est d'ailleurs qu'une valeur moyenne, sachant que la valeur instantanée peut varier notablement d'un endroit de l'enceinte à un autre, et ce, malgré la grande facilité de diffusion de l'hélium.

Une fois la quantité d'hélium injectée, ou même avant la fin de cette injection, les fumées de combustion, à la sortie des différentes batteries de tubes radiants 2 sont analysées cycliquement au niveau des collecteurs de sortie 3, que l'on investit les uns après les autres à l'aide de la ligne de prélèvement unique 11. Lors du passage d'un collecteur au suivant, un ordre de fermeture temporaire est donné par l'armoire de commande 10 à l'électrovanne 9.

L'analyse s'effectue à l'aide du détecteur d'hélium 15. Si de l'hélium est présent dans les fumées inspectées, à un niveau significatif, de l'ordre par exemple de 10 à 15 ppm, voire au délà, cela signifie qu'un tube radiant au moins de la batterie considérée est fissuré.

La détermination précise de la concentration d'hélium permet en outre d'estimer l'importance du, ou des défauts d'étanchéité.

Ensuite, une analyse individuelle à la sortie de chaque tube de la batterie ainsi repérée, permet d'identifier rapidement le ou les tubes fissurés à remplacer. Ces analyses individuelles s'effectuent aisément à l'aide de prélèvements réalisés, à l'aide de la ligne 11 elle-même, par la trappe d'accès du dernier coude du tube avant son collecteur.

La méthode de controle d'étanchéité selon l'invention est particulièrement économique puisque les tubes ne sont plus refroidis par passage d'air, les brûleurs restant en marche en permanence. La méthode présente également une grande fiabilité : l'expérience sur un four de recuit industriel montre une finesse de détection remarquable et quelques minutes d'attente après le début de l'injection de gaz traceur dans le four suffisent avant de procéder au contrôle.

Mais surtout, c'est sa transparence à l'égard de la marche du four qui sans doute traduit le mieux l'intérêt de la méthode : aucun brûleur n'est coupé, même momentanément, ce qui permet d'aller très vite en procédant en deux temps : dégrossir d'abord au niveau des batteries en scrutant un collecteur après l'autre, puis rechercher le,-- ou les tubes défaillant seulement dans les batteries ainsi identifiées.

Un certain soin doit bien entendu être apporté à la maintenance de la ligne de prélèvement, mais rien que de l'habituel dans ce domaine classique de prélèvement d'échantillons gazeux industriels à haute température : épuration par condensation-filtrage et séchage, et régulation en débit-pression avant l'arrivée dans l'analyseur. Une entrée secondaire 17 sera avantageusement prévue sur le régulateur 14 pour l'introduction d'un gaz étalon permettant de temps à autre le recalibrage de l'analyseur 15.

Quant au gaz traceur utilisable, on pourra retenir tout traceur gazeux qui, à l'instar de l'argon, diffuse rapidement dans l'atmosphère du four, soit chimiquement inerte à l'égard de la bande qui y défile à chaud, soit neutre à l'égard du caractère réducteur de l'atmosphère du four et qui ne soit pas présent naturellement de façon significative dans les fumées de combustion des brûleurs.

## Revendications

1. Méthode de contrôle de l'étanchéité de tubes radiants dans un four industriel, **caractérisée en ce qu'**elle consiste :
- à injecter dans l'enceinte du four (1) une quantité connue d'un gaz traceur inerte (7) naturellement non présent dans les fumées de combustion des brûleurs des tubes radiants (2),
- puis à mesurer la teneur en ce gaz traceur dans les fumées de combustion au niveau des collecteurs de sortie (3) de chaque batterie de tubes radiants,
et si le résultat de la mesure traduit une teneur anormalement élevée, à rechercher alors le ou les tubes défecteux à l'aide de mesures individuelles de la teneur en ce gaz traceur à l'extrémité de sortie de chaque tube radiant de la batterie ainsi détectée.

2. Méthode selon la revendication 1, **caractérisée en ce que** le gaz traceur utilisé est de l'hélium.

3. Méthode selon la revendication 1, **caractérisée en ce qu'**on l'applique à un four de recuit sidérurgique.

4. Installation pour la mise en oeuvre de la méthode selon la revendication 1, **caractérisée en ce qu'**elle comprend :
- d'une part, une ligne (5) d'injection de gaz traceur dans l'enceinte d'un four (1) à tubes radiants (2), cette ligne étant pourvue d'un régulateur de débit constant (8) et d'une électrovanne d'arrêt (9),
- d'autre part, une ligne (11) de prélèvement d'échantillons gazeux sur les collecteurs de sortie (3) des tubes radiants, cette ligne de prélèvement étant dotée de moyens d'épuration et de séchage (12, 13, 14),
- et, à l'extrémité de la ligne de prélèvement, un analyseur (15) pour la mesure de la concentration, dans les fumées prélevées, dudit gaz traceur injecté dans le four par la ligne d'injection (5).

## Patentansprüche

1. Verfahren zur Kontrolle der Dichtigkeit von Strahlungsrohren in einem Industrieofen, **dadurch gekennzeichnet, dass** es darin besteht:
- in einen Ofenraum (1) eine bekannte Menge eines inerten Spürgases (7) einzublasen, welches in den Verbrennungsgasen der Brenner der Strahlungsrohre (2) naturgemäß nicht vorhanden ist,
- und den Gehalt an diesem Spürgas in den Verbrennungsgasen an den Austrittssammlern (3) jeder Strahlungsrohrgruppe dann zu messen,
und, wenn das Ergebnis der Messung einen anormal hohen Gehalt aufzeigt, nach dem oder den fehlerhaften Rohren zu suchen, und zwar mit Hilfe individueller Messungen des Gehaltes an diesem Spürgas an den Austrittsenden jedes Strahlungsrohrs der so ermittelten Gruppe.

2. Verfahren nach Anspruch 1, **dadurch gekennzeichnet, dass** das eingesetzte Spürgas Helium ist.

3. Verfahren nach Anspruch 1, **dadurch gekennzeichnet, dass** es auf einen siderurgischen Glühofen angewendet wird.

4. Anlage zur Durchführung des Verfahrens nach Anspruch 1, **dadurch gekennzeichnet, dass** sie umfasst:
- einerseits eine Leitung (5) zum Einblasen von Spürgas in einen Ofenraum (1) mit Strahlungsrohren (2), wobei diese Leitung mit einem Durchflussmengenkonstanthalter (8) und einem Absperrmagnetventil (9) versehen ist,
- andererseits eine Leitung (11) zur Entnahme von Gasproben aus den Austrittssammlern (3) der Strahlungsrohre, wobei diese Probeentnahmeleitung mit Reinigungs- und Trocknungsmitteln (12, 13, 14) versehen ist,
- und am Ende der Probeentnahmeleitung einen Analysator (15) zur Messung der Konzentration des durch die Einblasleitung (5) in den Ofen eingeblasenen Spürgases in den entnommenen Verbrennungsgasen.

## Claims

1. Method for tightness testing radiant tubes in an industrial furnace, **characterized in that** it consists in:
- injecting into the chamber of the furnace (1) a known quantity of an inert tracer gas (7) naturally not present in the flue gases from the burners of the radiant tubes (2),
- then measuring the content of this tracer gas in the flue gases at the outlet manifolds (3) from each battery of radiant tubes,
and, if the result of the measurement reveals an abnormally high content, then looking for the defective tube or tubes using individual measurements of the content of this tracer gas at the outlet end of each radiant tube in the battery thus detected.

2. Method according to Claim 1, **characterized in that** the tracer gas used is helium.

3. Method according to Claim 1, **characterized in that** it is applied to a steelworks annealing furnace.

4. Plant for implementing the method according to Claim 1, **characterized in that** it comprises:
- on the one hand, a line (5) for injecting tracer gas into the chamber of a furnace (1), with radiant tubes (2) this line being provided with a constant flow regulator (8) and a shutoff solenoid valve (9),
- on the other hand, a line (11) for taking gas samples at the outlet manifolds (3) of the radiant tubes, this sampling line being provided with purification and drying means (12, 13, 14),
- and, at the end of the sampling line, an analyser (15) for measuring the concentration, in the sampled flue gases, of said tracer gas injected into the furnace by the injection line (5).
